# EUROPÄISCHE PATENTSCHRIFT

(11) **EP 1 650 002 B1**
(45) Veröffentlichungstag und Bekanntmachung des Hinweises auf die Patenterteilung: **19.03.2008**
(21) Anmeldenummer: 05021563.1
(22) Anmeldetag: 01.10.2005
(51) Int. Cl.: B29C 45/28, B29C 45/30

(54) **Heisskanaldüse**
Hot runner nozzle
Buse à canal chaud

(30) Priorität: 23.10.2004 DE 102004051750
(43) Veröffentlichungstag der Anmeldung: 26.04.2006
(73) Patentinhaber: Otto Männer Innovation GmbH, 79353 Bahlingen (DE)
(72) Erfinder: Spuller, Swen, 79362 Forchheim (DE)
(74) Vertreter: Dimmerling, Heinz

(56) Entgegenhaltungen:
- WO-A-02/078929
- US-A- 5 192 556
- US-A- 5 851 571
- US-A1- 2003 118 687
- PATENT ABSTRACTS OF JAPAN Bd. 2003, Nr. 12, 5. Dezember 2003 (2003-12-05) -& JP 2004 237518 A (SUMITOMO HEAVY IND LTD), 26. August 2004 (2004-08-26)
- PATENT ABSTRACTS OF JAPAN Bd. 1997, Nr. 06, 30. Juni 1997 (1997-06-30) -& JP 09 048043 A (MITSUBISHI HEAVY IND LTD), 18. Februar 1997 (1997-02-18)

## Beschreibung

Die Erfindung betrifft eine Heißkanaldüse nach dem Oberbegriff des Anspruchs 1, für Spritzgießformen, mit einem Düsenkörper, welcher einen Massekanal für Schmelze hat, welcher an einem Ende eine Düsenaustrittsöffnung und an seinem anderen Ende eine seitlich angeordnete Zuführöffnung hat, und durch welche sich eine Verschlußnadel erstreckt, mittels der der Schmelzeaustritt aus der Düsenaustrittsöffnung unterbindbar ist.

Eine derartige Heißkanaldüse ist beispielsweise aus der DE 199 50 273 C1 bekannt. Bei der bekannten Heißkanaldüse, welche regelmäßig in einem Spritzgießwerkzeug eingebaut ist, wird Kunststoffschmelze mittels in dem Spritzgießwerkzeug angeordneter Kanäle über die seitlich angeordnete Zuführöffnung in den Massekanal geleitet. Über den Massekanal, welcher regelmäßig mit Schmelze ausgefüllt ist, gelangt die Schmelze zur Düsenaustrittsöffnung. Gibt die Verschlußnadel die Düsenaustrittsöffnung frei, kann Schmelze in eine sich an die Düsenaustrittsöffnung anschließende Form eindringen. Verschließt die Verschlußnadel die Düsenaustrittsöffnung, staut sich die Schmelze im Massekanal. Statt daß die Verschlußnadel die Düsenaustrittsöffnung verschließt, kann sie auch eine im Spritzgießwerkzeug angeordnete Anbindungsöffnung verschließen, wobei die Düsenaustrittsöffnung dann als Führung der Verschlußnadel dient.

Um eine hohe Qualität von Spritzgießteilen zu erreichen, ist es äußerst wichtig, daß die Schmelze eine homogene Konsistenz hat. Die an der Zuführöffnung noch vorhandene homogene Konsistenz kann jedoch durch die im Massekanal angeordnete Verschlußnadel gestört werden. Denn, da die Schmelze seitlich in den Massekanal eintritt, trifft sie auf die Verschlußnadel, wo der Schmelzestrom in zwei Teile aufgeteilt wird. Hinter der Verschlußnadel treffen die beiden Schmelzeströme zwar wieder aufeinander, jedoch können sich Fließlinien ausgebildet haben. Dies ist sehr störend, da die Fließlinien häufig bei dem herzustellenden Spritzgießteil optisch in Erscheinung treten, was unter Umständen zu Ausschluß führen kann. Des weiteren besteht bei der bekannten Heißkanaldüse die Gefahr, daß sich in entlegenen Bereichen des Massekanals Schmelze absetzt und erst wieder zu einem späteren Zeitpunkt von dem Schmelzefluß erfaßt und von diesem mitgenommen wird. Durch die abgesetzten Teile wird die Homogenität der Schmelze ebenfalls erheblich gestört.

Aus der WO 01/34365 A1 ist eine Mischvorrichtung für Spritzgießmaschinen bekannt, welche einen Massekanal für Kunststoffschmelze mit einer stirnseitig angeordneten Zuführöffnung und einer stirnseitig angeordneten Auslaßöffnung aufweist. In dem Massekanal ist ein zylindrisches Verschlußelement angeordnet, mittels welchem die Auslaßöffnung verschließbar ist.

Das Verschlußelement erstreckt sich durch eine Buchse, welche mit ihrer äußeren Wandung dicht an der Wandung des Massekanals anliegt. An der inneren Wandung der Buchse ist eine sich spiralförmig über die gesamte Länge der Buchse erstreckende Vertiefung ausgebildet, welche mit der Wandung des Massekanals einen Kanal bildet. Der zwischen zwei benachbarten Gängen der spiralförmigen Vertiefung ausgebildete Steg liegt an dem der Auslaßöffnung abgewandten Ende der Buchse wenigstens während einer vollständigen Windung dicht auf dem Verschlußelement auf. Hierdurch kann Schmelze nur durch die Vertiefung beziehungsweise den mittels des Verschlußelements gebildeten geschlossenen Kanal zur Auslaßöffnung gelangen.

In Richtung zur Auslaßöffnung bildet sich jedoch zwischen dem Steg und dem Verschlußelement ein stetig größer werdender Spalt aus, so daß Schmelze auch durch diesen Spalt in axialer Richtung zur Auslaßöffnung gelangen kann. Hierdurch soll eine gute Durchmischung der Schmelze erreicht werden. Die bei einer seitlich angeordneten Zuführöffnung vorhandenen Probleme lassen sich mittels des bekannten Mischelements jedoch nicht beheben.

Aus der WO 02/078929 A1 ist eine weitere Mischvorrichtung für Spritzgießmaschinen bekannt, bei welcher Kunststoffschmelze über eine seitlich angeordnete Zuführöffnung einem Massekanal für Kunststoffschmelze zugeführt wird. In dem Massekanal ist eine Führungsbuchse für eine Verschlussnadel angeordnet, welche an ihrer Oberfläche sich schraubenförmig erstreckende Vertiefungen aufweist, welche mit der Wandung , des Massekanals Kanäle bilden.

Des Weiteren ist aus der US 5,851,571 A eine Heißkanaldüse für Spritzgießformen bekannt, welche im Inneren ihres Düsenkörpers einen Massekanal für Schmelze hat, welcher an einem Ende eine Düsenaustrittsöffnung und an seinem anderen Ende eine seitlich angeordnete Zuführöffnung hat, und durch welche sich eine Verschlussnadel erstreckt, mittelsder der Schmelze austritt aus der Düsenaustrittsöffnung unterbindbar ist. Die Verschlussnadel erstreckt sich durch eine Nadelführungsbuchse, welche einen Kanal aufweist, durch den Schmelze in den Massekanal einleitbar ist.

Darüber hinaus ist aus Patent Abstract of Japan Bd.2003, Nr. 12, 05. Dezember 2003 (2003-12-05) - JP 2004 237518 A (SUMITOMO HEAVY IND LTD.), 26. August 2004 (2004-08-26) eine Heißkanaldüse für Spritzgießformen bekannt, welche einen Massekanal für Schmelze hat, in dem eine Nadelführungsbuchse für eine Verschlussnadel angeordnet ist, welche auf ihrer Oberfläche Vertiefungen aufweist, welche wie ein eingängiges Links- beziehungsweise Rechtsgewinde ausgebildet sind. Die Vertiefungen haben einen rechteckförmigen Querschnitt, welcher über den gesamten Verlauf der Vertiefungen konstant bleibt.

Es ist Aufgabe der Erfindung, eine eingangs genannte Heißkanaldüse derart auszubilden, daß sie Schmelze mit sehr homogener Konsistenz abgibt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Heißkanaldüse für Spritzgießformen, mit einem Düsenkörper, welcher einen Massekanal für Schmelze hat, welcher an einem Ende eine Düsenaustrittsöffnung und an seinem anderen Ende eine seitlich angeordnete Zuführöffnung hat, und durch welchen sich eine Verschlußnadel erstreckt, mittels der Schmelzeaustritt durch die Düsenaustrittsöffnung unterbindbar ist, vorgesehen, wobei sich die Verschlußnadel durch eine Nadel-führungsbuchse erstreckt, mittels welcher der Raum des Massekanals um die Zuführöffnung herum begrenzt ist.

Dadurch, daß sich die Verschlußnadel durch eine Nadelführungsbuchse erstreckt, mittels welche der Raum des Massekanals um die Zuführöffnung herum begrenzt ist, wird in vorteilhafter Weise vermieden, daß Schmelze in abgelegene Bereiche des Massekanals gelangen kann. Hierdurch kann insbesondere vermieden werden, daß sich Schmelze in Bereichen des Massekanals absetzen kann, was seinerseits zur Folge hat, daß es nicht mehr vorkommen kann, daß sich abgesetzte Schmelze mit neuer Schmelze vermischen kann. Hierdurch ist gewährleistet, daß die Schmelze eine sehr homogene Konsistenz hat.

Besonders vorteilhaft ist es, wenn die Begrenzung derart ausgebildet ist, daß ein Schmelzefluß in den der Zuführöffnung gegenüberliegenden Bereich des Massekanals vermieden wird. Denn in dem der Zuführöffnung gegenüberliegenden Bereich ist einerseits die Gefahr, daß die Schmelze im Massekanal absetzt, besonders groß, und sind andererseits Fließlinien sehr ausgeprägt. Es versteht sich von selbst, daß durch die Begrenzung auch vermieden werden soll, daß Schmelze in den Teil des Massekanals gelangen kann, der von der Austrittsöffnung her gesehen jenseits der Zuführöffnung liegt. Denn insbesondere in diesem Bereich ist die Gefahr, daß die Schmelze absetzt, besonders groß.

Als sehr vorteilhaft hat sich eine Ausführungsform der Erfindung herausgestellt, bei der sich die Begrenzung des Massekanals in Richtung der Düsenaustrittsöffnung ausweitet. Durch die sich ausweitende Begrenzung des Massekanals wird in vorteilhafter Weise erreicht, daß sich der Schmelzestrom langsam ausbreiten und die Verschlußnadel allmählich umschließen kann. Dies ist insbesondere im Hinblick auf die Vermeidung von Fließlinien sehr vorteilhaft.

Bei einer weiteren besonderen Ausführungsform der Erfindung ist vorgesehen, daß die Nadelführungsbuchse wenigstens den der Zuführöffnung abgewandten Bereich des Massekanals ausfüllt. Hierdurch wird auf einfache Weise eine Begrenzung des Raums um die Zuführöffnung herum erreicht. Denn in den Bereich, in dem die Nadelführungsbuchse den Massekanal ausfüllt, kann keine Schmelze gelangen. Darüber hinaus läßt sich auf diese Art und Weise eine Begrenzung sehr einfach und damit kostengünstig herstellen.

Als wesentlich hat sich für die Erfindung erwiesen, dass bei der die Nadelführungsbuchse an ihrer Oberfläche Vertiefungen aufweist, welche mit der Wandung des Massekanals geschlossene Kanäle bilden. Durch die Vertiefungen beziehungsweise Kanäle läßt sich auf einfache Weise der Weg der Schmelze durch den Massekanal vorgeben. An den Stellen, wo die Nadelführungsbuchse keine Vertiefungen hat, füllt die Nadelführungsbuchse den Massekanal vollständig aus, weshalb die Begrenzung des Raumes des Massekanals um die Zuführöffnung herum dadurch gebildet werden kann, daß die Nadelführungsbuchse in dem entsprechenden Bereich keine Vertiefungen hat.

Sehr vorteilhaft bei der letztgenannten Ausführungsform ist es, wenn die Vertiefungen sich schraubenförmig um die Nadelführungsbuchse herum winden. Hierbei ist es besondere vorteilhaft, wenn wenigstens zwei Vertiefungen vorhanden sind, welche wie ein eingängiges Links- beziehungsweise Rechtsgewinde ausgebildet sind. Hierdurch schlingt sich ein Kanal einmal vollständig mit Linksdrall um die Nadelführungsbuchse herum und der andere Kanal einmal vollständig mit Rechtsdrall um die Nadelführungsbuchse herum, wobei sich die beiden Kanäle an der der Zuführöffnung gegenüberliegenden Seite der Nadelführungsbuchse kreuzen. Durch die Kreuzung der Kanäle erhöht sich die Vermischung und damit die Homogenität des Schmelzestromes.

Die Vermischung des Schmelzestromes kann jedoch dadurch wesentlich erhöht werden, daß die Nadetführungsbuchse eine Vielzahl parallel verlaufender Vertiefungen aufweist. Hierbei ist es sehr vorteilhaft, wenn die Vertiefungen beziehungsweise die entsprechenden Kanäle jeweils in den Vertiefungen beziehungsweise Kanälen beginnen, welche wie ein eingängiges Links- beziehungsweise Rechtsgewinde auf der Oberfläche der Nadelführungsbuchse verlaufen. Durch die Vielzahl der parallel verlaufenden Vertiefungen ergibt sich ebenfalls eine Vielzahl von Kreuzungspunkten, wodurch eine äußerst gute Durchmischung und damit Homogenität der Schmelze erfolgt. Hierdurch wird das Entstehen von Fließlinien nahezu vollständig vermieden.

Wesentlich für die Erfindung ist, dass sich der Querschnitt der Vertiefungen mit zunehmender Entfernung von der Zuführöffnung vergrößert. Hierdurch wird in vorteilhafter Weise erreicht, daß der der Zuführöffnung gegenüberliegende Bereich des Massekanals mit einem etwa gleich großen Masseanteil an Schmelze durchflossen wird, wie der der Zuführöffnung zugewandte Bereich des Massekanals. Der in den der Zuführöffnung abgelegenen Bereich des Massekanals führende längere Weg der Schmelze wird durch eine Vergrößerung des Querschnitts der Vertiefungen wieder ausgeglichen. Auch hierdurch wird die Homogenität der Schmelze erhöht, sowie eine gleichmäßige Fließfront der Schmelze erreicht.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Figur 1: eine erfindungsgemäß ausgebildete Heißkanaldüse im Schnitt, mit nicht geschnittener Nadelführungsbuchse,
- Figur 2: die in Figur 1 dargestellte Heißkanaldüse im Schnitt jedoch mit ebenfalls im Schnitt dargestellter Nadelführungsbuchse,
- Figur 3: eine Nadelführungsbuchse in perspektivischer Darstellung,
- Figur 4: die in Figur 3 dargestellte Nadelführungsbuchse von vorne,
- Figur 5: die in Figur 3 dargestellte Nadelführungsbuchse von der Seite und
- Figur 6: die in Figur 3 dargestellte Nadelführungsbuchse von hinten.

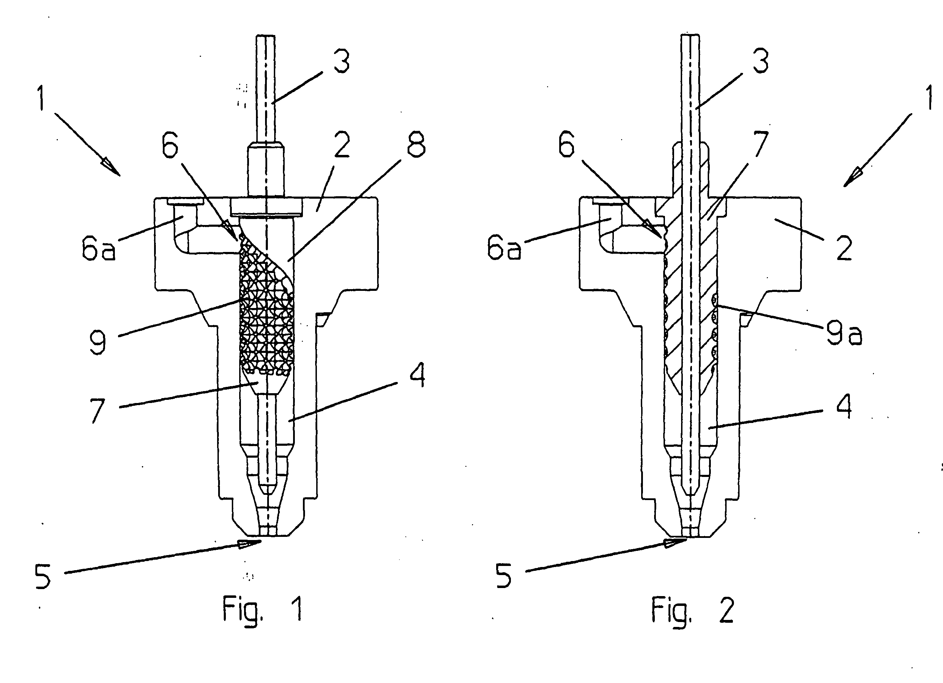

Wie den Figuren 1 und 2 entnommen werden kann, weist eine Heißkanaldüse 1 einen Düsenkörper 2 auf, durch welchen sich ein Massekanal 4 für Schmelze erstreckt. Der Massekanal 4 hat an einem Ende eine Zuführöffnung 6, über welche mittels eines im Düsenkörper 2 ausgebildeten Zuführkanals 6a Kunststoffschmelze in den Massekanal 4 einbringbar ist. Am anderen Ende weist der Massekanal 4 eine düsenförmige Austrittsöffnung 5 auf. Die Düsenaustrittsöffnung 5 beziehungsweise eine in der Figur nicht dargestellte Anbindungsöffnung des Spritzgießwerkzeugs ist mittels einer Verschlußnadel 3, welche sich in axialer Richtung durch den Massekanal 4 erstreckt, verschließ- beziehungsweise öffenbar.

An dem der Düsenaustrittsöffnung 5 entgegengesetzten Ende des Massekanals 4 ist in dem Massekanal 4 eine Nadelführungsbuchse 7 angeordnet, durch welche sich die Verschlußnadel 3 erstreckt, wobei sie in der Nadelführungsbuchse 7 axial beweglich und dicht angeordnet ist. Mittels der Nadelführungsbuchse 7 ist der Massekanal 4 an seinem der Düsenaustrittsöffnung 5 entgegengesetzten Ende dicht verschlossen.

Die Nadelführungsbuchse 7 füllt an ihrem der Düsenaustrittsöffnung 5 abgewandten Ende den Massekanal 4 in einem Teilbereich 8 vollständig aus. Das heißt, der Durchmesser der Nadelführungsbuchse 7 entspricht im Teilbereich 8 dem Durchmesser des Massekanals 4.

Wie insbesondere Figur 1 entnommen werden kann, reicht der Teilbereich 8 teilweise bis an die Zuführöffnung 6 heran. Hierdurch wird der Raum des Massekanals 4 um die Zuführöffnung 6 herum begrenzt.

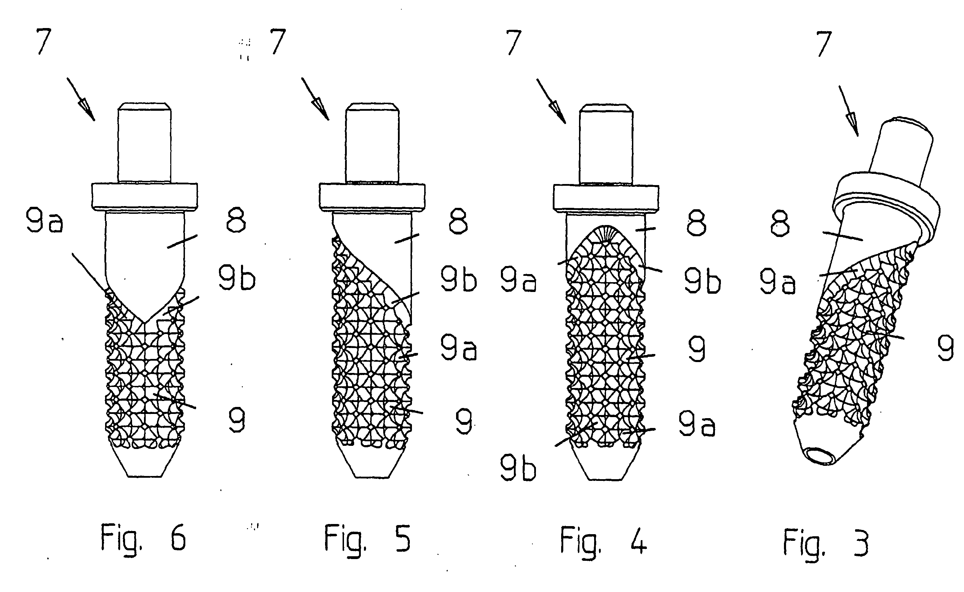

Wie insbesondere den Figuren 3 bis 6 entnommen werden kann, weist die Nadelführungsbuchse 7 an ihrer nicht zum Teilbereich 8 gehörenden Oberfläche Vertiefungen 9 auf. Die Vertiefungen 9 bilden mit dem Massekanal 4 beziehungsweise dem Düsenkörper 2 geschlossene Kanäle. Hierdurch ist die Schmelze gezwungen, dem Weg der Kanäle zu folgen.

Die Begrenzung des Teilbereichs 8 hat einen Verlauf, der etwa dem Verlauf von jeweils eines halben Ganges eines eingängigen Links- beziehungsweise Rechtsgewinde entspricht. Angrenzend an die Begrenzung des Teilbereichs 8 verlaufen zwei Vertiefungen 9a, 9b, welche einen Verlauf haben, der etwa dem Verlauf eines eingängigen Rechts- beziehungsweise Linksgewindes entspricht, weshalb sich die Vertiefungen beziehungsweise die durch die Vertiefungen gebildeten Kanäle nach einem halben Gewindegang kreuzen. Das heißt, die durch die Vertiefungen 9a, 9b gebildeten Kanäle kreuzen sich an der Stelle, an der der Teilbereich 8 seine tiefste Stelle hat. Wie insbesondere Figur 4 entnommen werden kann, treffen die beiden durch die Vertiefungen 9a, 9b gebildeten Kanäle nachdem sie eine vollständige Umschlingung der Nadelführungsbuchse 7 durchgeführt haben, wieder aufeinander.

Parallel zu den Vertiefungen 9a, 9b, welche wie ein eingängiges Linksbeziehungsweise Rechtsgewinde ausgebildet sind, verläuft eine Vielzahl parallel verlaufender Vertiefungen 9. Die durch die parallel verlaufenden Vertiefungen 9 gebildeten Kanäle beginnen alle in den Vertiefungen 9a, 9b, welche wie ein eingängiges Links- beziehungsweise Rechtsgewinde ausgebildet sind. Durch die Vielzahl der parallel verlaufenden Vertiefungen 9 ergibt sich eine Vielzahl von Kreuzungspunkten, wodurch eine sehr gute Durchmischung der Schmelze erreicht wird.

Wie insbesondere Figur 2 entnommen werden kann, ist die lichte Weite der Vertiefungen 9c an der der Zuführöffnung 6 gegenüberliegenden Seite der Nadelfühiungsbuchse 7 größer als an der Zuführöffnung 6 zugewandten Seite. Hierdurch wird erreicht, daß in dem der Zuführöffnung 6 abgewandten Bereich des Massekanals 4 nahezu genauso viel Schmelze in Richtung Düsenaustrittsöffnung 5 fließt, wie in dem der Zuführöffnung 6 zugewandten Bereich. Hierdurch wird erreicht, daß die Schmelze, die aus den Vertiefungen 9 austritt und in den Massekanal 4 eintritt, eine gleichmäßige Fließfront hat.

## Patentansprüche

1. Heißkanaldüse (1) für Spritzgießformen, mit einem Düsenkörper (2), welcher einen Massekanal (4) für Schmelze hat, welcher an einem Ende eine Düsenaustrittsöffnung (5) und an seinem anderen Ende eine seitlich angeordnete Zuführöffnung (6) hat, und durch welchen sich eine Verschlußnadel (3) erstreckt, mittels der der Schmelzeaustritt aus der Düsenaustrittsöffnung (5) unterbindbar ist, wobei;
sich die Verschlußnadel (3) durch eine Nadelführungsbuchse (7) erstreckt, mittels welcher der Raum des Massekanals (4) um die Zuführöffnung (6) herum begrenzt ist, und
die Nadelführungsbuchse (7) an ihrer Oberfläche Vertiefungen (9) aufweist, welche mit der Wandung des Massekanals (4) Kanäle bilden,
**dadurch gekennzeichnet,**
**daß** die lichte weite der Vertiefungen (9c) an der der Zuführöffnung (6) gegenüberliegräden seite größen ist als an der der Zufükhröffnung (6) Zugenandten Seite.

2. Heißkanaldüse nach Anspruch 1,
**dadurch gekennzeichnet,**
**daß** die Begrenzung derart ausgebildet ist, daß ein Schmelzefluß in den der Zuführöffnung (6) gegenüberliegenden Bereich des Massekanals (4) vermieden wird.

3. Heißkanaldüse nach Anspruch 1 oder 2,
**dadurch gekennzeichnet,**
**daß** sich die Begrenzung des Massekanals (4) in Richtung der Düsenaustrittsöffnung (5) ausweiten.

4. Heißkanaldüse nach einem der Ansprüche 1 bis 3,
**dadurch gekennzeichnet,**
**daß** die Nadelführungsbuchse (7) wenigstens den der Zuführöffnung (6) abgewandten Bereich des Massekanals (4) ausfüllt (8),

5. Heißkanaldüse nach einem der Ansprüche 1 bis 4,
**dadurch gekennzeichnet,**
**daß** die Vertiefungen (9) sich schraubenförmig um die Nadelführungsbuchse (7) winden.

6. Heißkanaldüse nach Anspruch 5,
**dadurch gekennzeichnet,**
**daß** wenigstens zwei Vertiefungen (9a, 9b) vorhanden sind, welche wie ein eingängiges Links- beziehungsweise Rechtsgewinde ausgebildet sind.

7. Heißkanaldüse nach Anspruch 5 oder 6.
**dadurch gekennzeichnet,**
**daß** eine Vielzahl parallel verlaufender Vertiefungen (9) vorhanden sind.

## Claims

1. Hot nozzle (1) for injection moulding, comprising a nozzle body (2) which has a mass flow channel (4) for melt, said mass flow channel having at one end a nozzle outlet opening (5) and at its other end a laterally arranged inlet opening (6), and through which a valve needle (3) extends, by means of which the melt outflow from the nozzle outlet opening (5) can be prevented, wherein the valve needle (3) extends through a valve needle guide sleeve (7), by means of which the space in the mass flow channel (4) round the inlet opening (6) is delimited, and wherein the needle guide sleeve (7) has depressions (9) on its surface, forming channels together with the wall of the mass flow channel (4), **characterised in that** the clear width of the depressions (9c) on the side opposing the inlet opening (6) is greater than on the side facing towards the inlet opening (6).

2. Hot nozzle according to claim 1, **characterised in that** the delimitation is configured such that a melt flow into the region of the mass flow channel (4) opposing the inlet opening (6) is avoided.

3. Hot nozzle according to claim 1 or 2, **characterised in that** the delimitation of the mass flow channel (4) widens in the direction towards the nozzle outlet opening (5).

4. Hot nozzle according to one of the claims 1 to 3, **characterised in that** the needle guide sleeve (7) fills (8) at least the region of the mass flow channel (4) facing away from the inlet opening (6).

5. Hot nozzle according to one of the claims 1 to 4, **characterised in that** the depressions (9) wind helically round the needle guide sleeve (7).

6. Hot nozzle according to claim 5, **characterised in that** at least two depressions (9a, 9b) are provided which are formed as a single-flight left-hand or right-hand thread.

7. Hot nozzle according to claim 5 or 6, **characterised in that** a plurality of depressions (9) running parallel to one another is provided.

## Revendications

1. Buse à canal chaud (1) pour moules d'injection, avec un corps de buse (2) qui possède un canal à matière (4) pour la matière fondue, canal qui est pourvu à une extrémité d'une ouverture de sortie de buse (5) et à son autre extrémité d'une ouverture d'alimentation (6) disposée latéralement, et à travers lequel s'étend un pointeau de fermeture (3) permettant d'empêcher la sortie de matière fondue par l'ouverture de sortie de buse (5), sachant que le pointeau de fermeture (3) s'étend à travers une douille (7) de guidage de pointeau qui délimite l'étendue du canal à matière (4) tout autour de l'ouverture d'alimentation (6), et que la douille (7) de guidage de pointeau présente sur sa surface des renfoncements (9) qui forment des canaux avec la paroi du canal à matière (4),
**caractérisée en ce que** la largeur de passage des renfoncements (9c) est plus grande sur le côté opposé à l'ouverture d'alimentation (6) que sur le côté tourné vers l'ouverture d'alimentation (6).

2. Buse à canal chaud selon la revendication 1, **caractérisée en ce que** la délimitation est conçue de manière à empêcher un flux de matière fondue dans la région du canal à matière (4) qui est opposée à l'ouverture d'alimentation (6).

3. Buse à canal chaud selon la revendication 1 ou 2, **caractérisée en ce que** la délimitation du canal à matière (4) s'élargit en direction de l'ouverture de sortie de buse (5).

4. Buse à canal chaud selon l'une des revendications 1 à 3, **caractérisée en ce que** la douille (7) de guidage de pointeau remplit au moins la région (8) du canal à matière (4) qui est opposée à l'ouverture d'alimentation (6).

5. Buse à canal chaud selon l'une des revendications 1 à 4, **caractérisée en ce que** les renfoncements (9) s'étendent en hélice autour de la douille (7) de guidage de pointeau.

6. Buse à canal chaud selon la revendication 5, **caractérisée en ce qu'**au moins deux renfoncements (9a, 9b) sont présents, qui sont configurés à la manière d'un filetage à pas simple respectivement à gauche ou à droite.

7. Buse à canal chaud selon la revendication 5 ou 6, **caractérisée en ce qu'**une pluralité de renfoncements (9) qui s'étendent en parallèle sont présents.
